# FASCICULE DE BREVET EUROPEEN

(11) **EP 3 003 813 B1**
(45) Date de publication et mention de la délivrance du brevet: **08.03.2017**
(21) Numéro de dépôt: 14732260.6
(22) Date de dépôt: 12.05.2014
(51) Int. Cl.: B60W 30/18, B60W 20/00

(54) **PROCÉDÉ ET DISPOSITIF DE CONTRÔLE D'UN MODE DE MARCHE RAMPANTE D'UN VÉHICULE EN FONCTION DE SA VITESSE ET DU FREINAGE**
VERFAHREN UND VORRICHTUNG ZUR STEUERUNG EINES KRIECHFAHRMODUS EINES FAHRZEUGS JE NACH GESCHWINDIGKEIT UND ABBREMSUNG
METHOD AND DEVICE FOR CONTROLLING A CREEPING TRAVEL MODE OF A VEHICLE ON THE BASIS OF THE SPEED OF SAME AND THE BRAKING

(30) Priorité: 24.05.2013 FR 1354670
(43) Date de publication de la demande: 13.04.2016
(73) Titulaire: Peugeot Citroën Automobiles SA, 78140 Vélizy Villacoublay (FR)
(72) Inventeur: MILHAU, Yohan, F-78400 Chatou (FR); ROCQ, Gaetan, F-78125 La Boissiere Ecole (FR); LAUNAY, Cedric, F-78680 Epone (FR); DOUX, Florian, F-75116 Paris 16 (FR)
(86) Numéro de dépôt international: PCT/FR2014/051085
(87) Numéro de publication internationale: WO 2014/188103

(56) Documents cités:
- DE-A1-102006 051 230
- DE-A1-102009 055 832

## Description

L'invention concerne les véhicules qui sont dits automatisés, et plus précisément le contrôle d'un mode dit « de marche rampante » (ou rampage) au sein de tels véhicules.

On entend ici par « véhicule automatisé » aussi bien un véhicule comprenant un système de pilotage d'organes permettant d'adapter de manière automatique le rapport de démultiplication de son groupe motopropulseur (ou GMP) aux roues (comme par exemple une boîte de vitesse robotisée), qu'un véhicule n'ayant pas besoin de ce type de système de pilotage (comme par exemple un véhicule à GMP tout électrique). Par conséquent, l'invention concerne notamment les véhicules à groupe motopropulseur tout électrique, les véhicules à groupe motopropulseur hybride, et les véhicules à groupe motopropulseur à mécanisme d'automatisation du rapport de démultiplication (comme par exemple une boîte de vitesses manuelle robotisée, une boîte de vitesses à double embrayage, une boîte de vitesses automatique ou une boîte de vitesses continument variable).

Par ailleurs, on entend ici par « mode de marche rampante » (ou « rampage »), un mode de fonctionnement du GMP qui permet de déplacer le véhicule, à faible vitesse (typiquement de 5 à 12 km/h sur le plat) et de façon autonome, grâce à la fourniture d'un couple variable dès que le conducteur n'agit plus sur les pédale de frein et pédale d'accélérateur lorsque le véhicule roule à faible vitesse. Ce mode de déplacement (ou roulage) autonome (c'est-à-dire sans intervention du conducteur) est inhérent aux véhicules à boîte de vitesses automatique à convertisseur de couple, et a ensuite été implanté dans de nombreux autres véhicules automatisés. Il permet en effet au conducteur de manoeuvrer plus facilement son véhicule en n'actionnant temporairement que la pédale de frein.

Pour un véhicule équipé d'une boîte de vitesses automatique, le rampage est une résultante du fonctionnement du convertisseur de couple qui transforme l'écart de régime entre l'arbre d'entrée de la boîte de vitesses automatique (qui est relié au moteur thermique tournant à un régime non nul) et l'arbre de sortie de cette même boîte de vitesses automatique (qui est couplé aux roues en couple). Pour les autres véhicules automatisés, le rampage peut être réalisé par un pilotage d'organes destiné à se rapprocher du comportement d'un véhicule à convertisseur de couple.

Comme le sait l'homme de l'art, le rampage est un mode de roulage utile, mais qui, hélas, induit plusieurs inconvénients, et notamment une usure prématurée de l'embrayage lorsque le véhicule en est équipé, un échauffement de certains organes du GMP (comme par exemple la machine électrique ou l'embrayage), et une surconsommation (notamment du fait de la dissipation thermique d'énergie dans les freins) lorsqu'il est actif sous frein.

Au moins deux stratégies de désactivation du rampage ont été indépendamment proposées pour limiter l'impact des inconvénients précités.

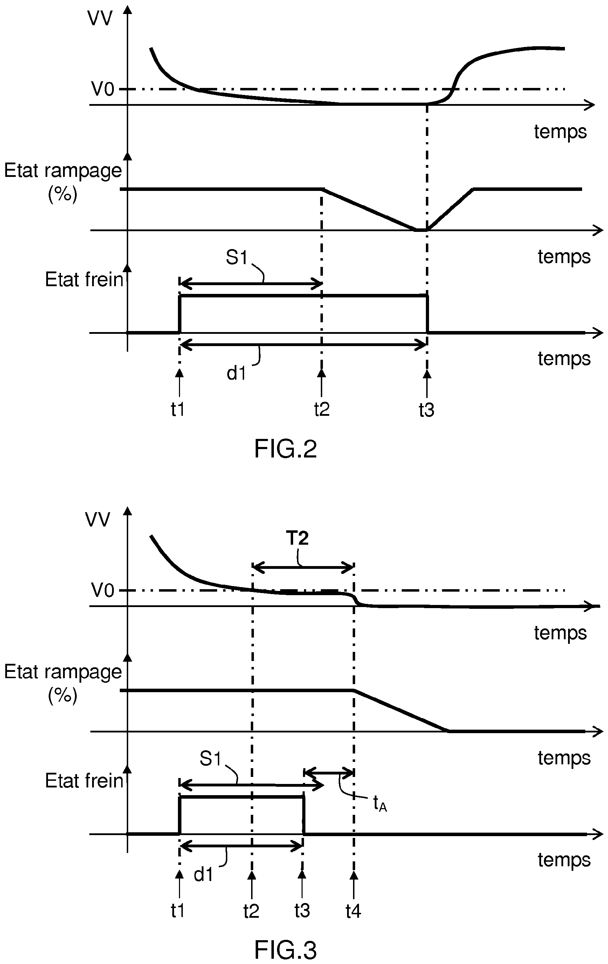

Une première stratégie, illustrée sur la figure 2, consiste à désactiver le rampage dès que la pédale de frein a été actionnée pendant une première durée d1 qui est égale à un premier seuil choisi S1. Dans l'exemple illustré sur la troisième courbe (« état frein ») de la figure 2, la première durée d1 débute à un instant t1, lorsque l'état du freinage passe d'une valeur 0 à une valeur 1, et se termine à un instant t3 (postérieur à un instant t2 marquant la fin du premier seuil choisi S1), lorsque la pédale de frein n'est plus actionnée et donc que l'état du freinage passe de la valeur 1 à la valeur 0. Le rampage est réactivé lors du lâché du pied de la pédale de frein à l'instant t3.

Une seconde stratégie, illustrée sur la figure 3, consiste à analyser la vitesse en cours VV du véhicule (première courbe en partant du haut) dès que le rampage est activé, et, si cette vitesse VV analysée demeure inférieure à un deuxième seuil choisi V0 pendant une seconde durée choisie T2, à désactiver le rampage lorsque cette seconde durée choisie T2 est écoulée. Dans l'exemple illustré sur la figure 3, la seconde durée d2 débute à un instant t2, lorsque la vitesse en cours VV du véhicule devient inférieure au deuxième seuil choisi V0 (voir la première courbe en partant du haut), par exemple du fait d'un ralentissement du véhicule causé par son roulage sur une route en pente, et se termine à un instant t4 où l'on décide de désactiver le rampage (voir la deuxième courbe (« état rampage »)).

Quand les deux stratégies précitées peuvent être mises en oeuvre de façon indépendante au sein d'un véhicule, cela pose un réel problème lorsque la première durée de freinage d1 (t1-t3) est inférieure au premier seuil choisi S1 (voir la deuxième courbe de la figure 3), et que pendant cette première durée d1 la vitesse en cours VV du véhicule devient à l'instant t2 (< t3) inférieure au deuxième seuil choisi V0 (voir la première courbe en partant du haut de la figure 3). En effet, la première durée de freinage d1 étant inférieure au premier seuil choisi S1, le rampage n'est pas désactivé à l'instant t3 où le freinage se termine, mais la désactivation est décidée à l'instant t4 où se termine la seconde durée choisie T2 (débutée à l'instant t2), soit t_{A} secondes après que le conducteur ait cessé de solliciter la pédale de frein. Comme le conducteur ne sollicite plus la pédale de frein dès l'instant t3, il pense que le rampage va se réactiver (car celui-ci se réactive normalement lors du lâché du pied de la pédale de frein, mais auparavant il n'avait pas été désactivé), mais cette réactivation ne survient pas du fait qu'à l'instant t4 (soit t_{A} secondes après t3) c'est une désactivation qui est décidée. Par conséquent, si le conducteur veut réactiver le rampage, il est par exemple contraint de solliciter de nouveau la pédale de frein, ce qui peut s'avérer illogique, voire potentiellement dangereux dans certaines situations, comme par exemple sur une route en pente ou lors d'une manoeuvre.

DE 10 2006 051230 A1 divulgue un procédé de contrôle d'un mode dit de marche rampante d'un véhicule, propre à déplacer ce dernier à faible vitesse par fourniture d'un couple variable produit par un groupe motopropulseur sans action d'un conducteur sur une pédale de frein ou une pédale d'accélérateur, le procédé comprenant la désactivation du mode de marche rampante lorsque la vitesse du véhicule demeure inférieure à un seuil choisi pendant une durée choisie.

L'invention a donc notamment pour but d'améliorer la situation.

Elle propose notamment à cet effet un procédé destiné à contrôler un mode dit « de marche rampante » d'un véhicule automatisé, propre à déplacer ce dernier à faible vitesse par fourniture d'un couple variable produit par son groupe motopropulseur sans action de son conducteur sur les pédales de frein et d'accélérateur. Ce procédé consiste, lorsque ce mode a été activé, à analyser la valeur d'un paramètre qui est représentatif de la vitesse en cours du véhicule consécutivement à un actionnement de la pédale de frein pendant une première durée qui est inférieure à un premier seuil choisi, et à désactiver ce mode après une seconde durée choisie, consécutive à la première durée, lorsque la valeur analysée demeure inférieure à un second seuil choisi pendant cette seconde durée choisie.

Ainsi, on peut désactiver le rampage lorsque le véhicule n'arrive pas augmenter sa vitesse, par exemple du fait qu'il roule sur une route dont la pente est importante, ou du fait qu'il a une faible adhérence, ou encore du fait qu'il y a un obstacle.

Le procédé de contrôle selon l'invention peut comporter d'autres caractéristiques qui peuvent être prises séparément ou en combinaison, et notamment :
- le paramètre analysé peut être choisi parmi (au moins) la vitesse en cours du véhicule, le régime de rotation en cours des roues avant et/ou des roues arrière du véhicule, et le régime de rotation maximum parmi le régime de rotation en cours des roues avant du véhicule et le régime de rotation en cours des roues arrière du véhicule ;
   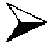 le paramètre peut être la vitesse en cours du véhicule ;
- le premier seuil peut être choisi en fonction de la valeur du paramètre analysé à l'instant où débute l'actionnement de la pédale de frein ;
- on peut analyser la valeur du paramètre dès que le mode est activé, et, si la valeur analysée demeure inférieure au second seuil choisi pendant la seconde durée choisie, on peut désactiver le mode après la seconde durée choisie si la pédale de frein n'a pas été actionnée pendant cette seconde durée choisie ;
- on peut désactiver le mode dès que la pédale de frein a été actionnée pendant une première durée qui est égale au premier seuil choisi.

L'invention propose également un dispositif, destiné à contrôler le mode de marche rampante d'un véhicule automatisé, et comprenant des moyens de contrôle agencés, lorsque ce mode a été activé, pour analyser la valeur d'un paramètre qui est représentatif de la vitesse en cours du véhicule consécutivement à un actionnement de la pédale de frein pendant une première durée inférieure à un premier seuil choisi, et pour déclencher une désactivation de ce mode après une seconde durée choisie, consécutive à cette première durée, lorsque la valeur analysée demeure inférieure à un second seuil choisi pendant cette seconde durée choisie.

Par exemple, les moyens de contrôle peuvent être agencés pour analyser un paramètre qui est la vitesse en cours du véhicule.

L'invention propose également un véhicule, éventuellement de type automobile, et comprenant un groupe motopropulseur à mode de marche rampante, et un dispositif de contrôle du type de celui présenté ci-avant.

Par exemple, le groupe motopropulseur peut être choisi parmi (au moins) un groupe motopropulseur tout électrique, un groupe motopropulseur hybride, et un groupe motopropulseur à mécanisme d'automatisation d'un rapport de démultiplication.

D'autres caractéristiques et avantages de l'invention apparaîtront à l'examen de la description détaillée ci-après, et des dessins annexés, sur lesquels:

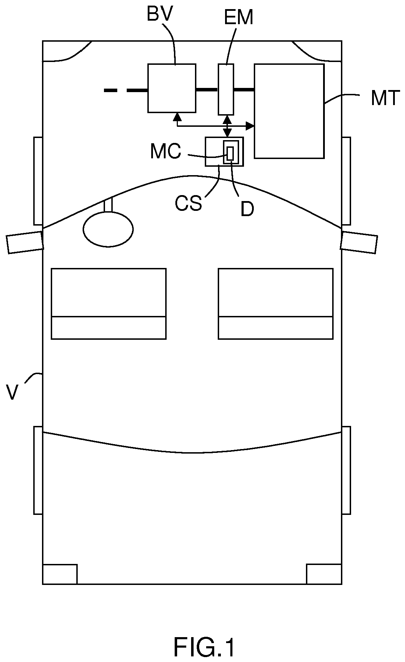

- la figure 1 illustre schématiquement et fonctionnellement un véhicule automatisé comprenant un groupe motopropulseur et un superviseur de groupe motopropulseur équipé d'un dispositif de contrôle selon l'invention,
- la figure 2 illustre au sein de trois diagrammes respectivement une première courbe d'évolution temporelle de la vitesse en cours (VV) d'un véhicule, une deuxième courbe d'évolution temporelle de l'état du rampage (en pourcentage) du groupe motopropulseur de ce véhicule, et une troisième courbe d'évolution temporelle d'un état de freinage de ce véhicule, lorsque l'on utilise un dispositif de contrôle de l'art antérieur et que la durée du freinage (d1) est supérieure à un premier seuil (S1),
- la figure 3 illustre au sein de trois diagrammes respectivement une première courbe d'évolution temporelle de la vitesse en cours (VV) d'un véhicule, une deuxième courbe d'évolution temporelle de l'état du rampage (en pourcentage) du groupe motopropulseur de ce véhicule, et une troisième courbe d'évolution temporelle d'un état de freinage de ce véhicule, lorsque l'on utilise un dispositif de contrôle de l'art antérieur, que la durée du freinage (d1) est inférieure au premier seuil (S1) et que la vitesse en cours (VV) du véhicule est inférieure à un deuxième seuil (V0) pendant une seconde durée choisie (T2), et

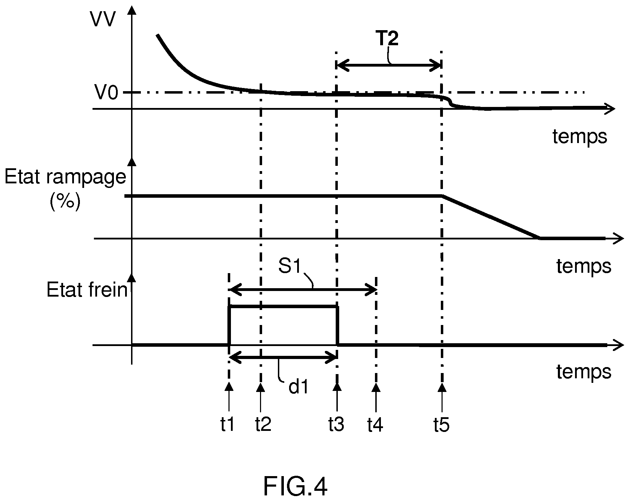

- la figure 4 illustre au sein de trois diagrammes respectivement une première courbe d'évolution temporelle de la vitesse en cours (VV) d'un véhicule, une deuxième courbe d'évolution temporelle de l'état du rampage (en pourcentage) du groupe motopropulseur de ce véhicule, et une troisième courbe d'évolution temporelle d'un état de freinage de ce véhicule, lorsque l'on utilise un dispositif de contrôle selon l'invention, que la durée du freinage (d1) est inférieure au premier seuil (S1) et que la vitesse en cours (VV) du véhicule est inférieure à un deuxième seuil (V0) pendant une seconde durée choisie (T2) après la fin du freinage.

L'invention a notamment pour but de proposer un procédé de contrôle, et un dispositif de contrôle D associé, destinés à contrôler le mode de marche rampante (ou rampage) d'un véhicule automatisé V comprenant un groupe motopropulseur et des pédales de frein et d'accélérateur.

Dans ce qui suit, on considère, à titre d'exemple non limitatif, que le véhicule automatisé V est de type automobile. Il s'agit par exemple d'une voiture. Mais l'invention n'est pas limitée à ce type de véhicule automatisé. Elle concerne en effet tout type de véhicule automatisé terrestre disposant d'un groupe motopropulseur, d'une part, comprenant au moins un moteur thermique MT et/ou au moins un moteur (ou machine) auxiliaire (électrique ou hydraulique ou à air comprimé) couplé à des moyens de stockage d'énergie, et, d'autre part, comprenant un système de pilotage d'organes chargé d'adapter automatiquement le rapport de démultiplication de son groupe motopropulseur aux roues, ou bien n'ayant pas besoin de ce type de système de pilotage . Par conséquent, l'invention concerne notamment les véhicules à groupe motopropulseur tout électrique, les véhicules à groupe motopropulseur hybride, et les véhicules à groupe motopropulseur à mécanisme d'automatisation du rapport de démultiplication.

Par ailleurs, on considère dans ce qui suit, à titre d'exemple non limitatif, que le groupe motopropulseur comprend un mécanisme d'automatisation du rapport de démultiplication se présentant sous la forme d'une boîte de vitesses manuelle robotisée BV. Mais l'invention n'est pas limitée à ce type de mécanisme d'automatisation du rapport de démultiplication. Elle concerne en effet, notamment, tout type de mécanisme d'automatisation du rapport de démultiplication, et notamment les boîtes de vitesses à double embrayage (ou DCT), les boîtes de vitesses automatiques, les boîtes de vitesses continument variables, et les boîtes de vitesses à démultiplication constante comme un crabot.

On a schématiquement représenté sur la figure 1 un véhicule (automatisé) V comprenant un groupe motopropulseur (éventuellement à roue libre), un superviseur CS propre à superviser le fonctionnement du groupe motopropulseur, et un dispositif de contrôle D selon l'invention.

Le groupe motopropulseur comprend notamment, ici, un moteur thermique MT, un arbre moteur, un embrayage EM, une boite de vitesses BV, et un arbre de transmission. Le moteur thermique MT comprend un vilebrequin (non représenté) qui est solidarisé fixement à l'arbre moteur afin d'entraîner ce dernier en rotation. La boîte de vitesses BV comprend (ici) un arbre d'entrée et un arbre de sortie destinés à être couplés l'un à l'autre. L'arbre d'entrée est destiné à recevoir le couple moteur via l'embrayage EM (qui est couplé à l'arbre moteur). L'arbre de sortie est destiné à recevoir le couple moteur via l'arbre d'entrée afin de le communiquer à l'arbre de transmission auquel il est couplé et qui est couplé indirectement à des roues du véhicule V. L'arbre d'entrée et l'arbre de sortie comprennent chacun des pignons (non représentés) qui sont destinés à participer ensemble de façon sélective à la définition des différentes vitesses sélectionnables de la boîte de vitesses BV.

Le fonctionnement des organes du groupe motopropulseur est contrôlé par le superviseur CS qui peut se présenter sous la forme d'un calculateur (de préférence dédié).

Comme indiqué précédemment, l'invention propose de mettre en oeuvre dans le véhicule V un procédé de contrôle destiné à contrôler son mode de marche rampante (ou rampage).

Un tel procédé peut être mis en oeuvre par le dispositif de contrôle D, et en particulier par des moyens de contrôle MC que comprend ce dernier (D). Dans l'exemple non limitatif illustré sur la figure 1, le dispositif de contrôle D fait partie du superviseur CS. Mais cela n'est pas obligatoire. Ce dispositif (de contrôle) D pourrait en effet être un équipement qui est couplé au superviseur CS, directement ou indirectement. Par conséquent, le dispositif de contrôle D peut être réalisé sous la forme de modules logiciels (ou informatiques ou encore « software »), ou bien d'une combinaison de circuits électroniques (ou « hardware ») et de modules logiciels.

Il est rappelé que le mode de marche rampante est destiné, lorsqu'il est activé par le superviseur CS, à déplacer le véhicule V à faible vitesse par fourniture d'un couple variable produit par son groupe motopropulseur sans que son conducteur n'agisse sur ses pédales de frein et d'accélérateur.

Le procédé de contrôle, selon l'invention, est mis en oeuvre lorsque le mode de marche rampante (ou rampage) a été activé par le superviseur CS.

Ce procédé consiste alors à analyser la valeur d'un paramètre qui est représentatif de la vitesse en cours VV du véhicule V consécutivement à un actionnement de la pédale de frein pendant une première durée d1 qui est inférieure à un premier seuil choisi S1, et à désactiver le mode de marche rampante (ou rampage) après une seconde durée choisie T2, consécutive à cette première durée d1, lorsque la valeur analysée demeure inférieure à un second seuil choisi V0 pendant toute la seconde durée choisie T2.

On comprendra que ce sont les moyens de contrôle MC du dispositif D qui sont chargés d'effectuer l'analyse précitée et de déclencher la désactivation du rampage par le calculateur CS lorsqu'ils constatent que la valeur analysée demeure inférieure au second seuil choisi V0 pendant la seconde durée choisie T2.

Par exemple, le paramètre qui est analysé peut être la vitesse en cours VV du véhicule V. Mais cela n'est pas obligatoire. En effet, il peut s'agir de n'importe quel paramètre représentatif de cette vitesse en cours VV, et notamment du régime de rotation en cours des roues avant et/ou des roues arrière du véhicule V, ou du régime de rotation maximum parmi le régime de rotation en cours des roues avant du véhicule V et le régime de rotation en cours des roues arrière du véhicule V.

On a schématiquement illustré sur la figure 4 trois exemples de diagramme permettant de mieux comprendre l'intérêt de l'invention. Le diagramme le plus en haut comprend une première courbe d'évolution temporelle de la vitesse en cours VV du véhicule V. Le diagramme du milieu comprend une deuxième courbe d'évolution temporelle de l'état du rampage (en pourcentage) du groupe motopropulseur du véhicule V. Le diagramme le plus en bas comprend une troisième courbe d'évolution temporelle de l'état du freinage du véhicule V.

Comme illustré sur le deuxième diagramme, à l'instant t1 le conducteur commence à solliciter la pédale de frein pour ralentir le véhicule V. Une première durée d1 débute donc à cet instant t1 lorsque l'état du freinage passe d'une valeur 0 à une valeur 1. Cette première durée d1 se termine ici à un instant t3, lorsque le conducteur cesse de solliciter la pédale de frein et donc que l'état du freinage passe de la valeur 1 à la valeur 0.

La première durée (de freinage) d1 (t1-t3) est ici inférieure au premier seuil choisi S1, et donc les moyens de contrôle MC du dispositif D ne déclenche pas de désactivation du rampage. Cependant, dans l'exemple illustré, les moyens de contrôle MC du dispositif D détectent qu'avant l'instant t3 le freinage a fait passer la vitesse en cours VV du véhicule V sous le deuxième seuil choisi V0 (depuis l'instant t2). Par conséquent, ils (MC) continuent d'analyser la vitesse en cours VV après l'instant t3 et déclenchent un comptage temporel à compter de cet instant t3 qui définit le début d'une nouvelle durée. Si à un instant t5, marquant l'expiration d'une seconde durée choisie T2 débutée à l'instant t3, les moyens de contrôle MC observent que la vitesse en cours VV du véhicule V est demeurée constamment inférieure au deuxième seuil choisi V0, ils (MC) déclenchent à l'instant t5 la désactivation du rampage. On notera que si les moyens de contrôle MC observent que la vitesse en cours VV du véhicule V devient supérieure au deuxième seuil choisi V0 entre les instants t3 et t5, ils (MC) ne font rien et donc le rampage demeure activé.

Avec cette stratégie, le véhicule V a donc toute la seconde durée choisie T2 pour repasser au-dessus du deuxième seuil choisi V0 avant que le rampage ne soit désactivé pour faciliter l'agrément de conduite du conducteur pendant une situation problématique, comme par exemple lorsque le véhicule n'arrive pas augmenter sa vitesse du fait qu'il roule sur une route dont la pente est importante, ou qu'il a une faible adhérence, ou encore qu'il y a un obstacle.

On notera que les moyens de contrôle MC peuvent être agencés de manière à choisir le premier seuil S1 en fonction de la valeur du paramètre analysé (ici VV) à l'instant où débute l'actionnement de la pédale de frein. Il est en effet avantageux que ce premier seuil S1 soit d'autant plus court que la vitesse en cours VV est élevée. Mais un typage contraire peut également être sélectionné.

On notera également que les moyens de contrôle MC peuvent être avantageusement agencés de manière à analyser la valeur du paramètre (ici VV) dès que le rampage est activé. Dans ce cas, lorsque la valeur analysée demeure inférieure au second seuil choisi V0 pendant toute la seconde durée choisie T2, les moyens de contrôle MC désactivent le rampage après la seconde durée choisie T2 si la pédale de frein n'a pas été actionnée pendant cette seconde durée choisie T2. Le dispositif D assure ainsi une désactivation du rampage dans une deuxième situation.

On notera également que les moyens de contrôle MC peuvent être avantageusement agencés de manière à désactiver ledit rampage dès que la pédale de frein a été actionnée pendant une première durée d1 qui est égale au premier seuil choisi S1. Le dispositif D assure ainsi une désactivation du rampage dans une troisième situation.

On notera également qu'une vitesse faible causée par un appui sur la pédale de frein ne permet plus de désactiver le rampage directement via le critère de désactivation de vitesse faible (à cause du problème présenté en référence à la figure 3), car la condition de désactivation du rampage sur détection d'un appui sur la pédale de frein couvre cette désactivation.

Cette invention permet une amélioration notable de l'agrément de conduite lorsque le véhicule n'arrive pas à prendre de la vitesse sous rampage, du fait que son conducteur n'aura plus la sensation d'avoir une désactivation du rampage à tort dans certaines situations de vie. En outre, l'invention permet dans les phases d'arrêt du véhicule, induites par un élément extérieur (comme par exemple une forte pente, une faible adhérence, ou la présence d'un obstacle), une réduction de l'usure prématurée de l'embrayage lorsque le véhicule en est équipé, de l'échauffement de certains organes du GMP, et de la consommation.

## Revendications

1. Procédé de contrôle d'un mode dit « de marche rampante » d'un véhicule (V), propre à déplacer ce dernier (V) à faible vitesse par fourniture d'un couple variable produit par un groupe motopropulseur sans action d'un conducteur sur une pédale de frein ou une pédale d'accélérateur, **caractérisé en ce qu'**il consiste, lorsque ledit mode a été activé, à analyser la valeur d'un paramètre représentatif de la vitesse en cours dudit véhicule (V) consécutivement à un actionnement de ladite pédale de frein pendant une première durée inférieure à un premier seuil choisi, et à désactiver ledit mode après une seconde durée choisie, consécutive à ladite première durée, lorsque ladite valeur analysée demeure inférieure à un second seuil choisi (V0) pendant ladite seconde durée choisie.

2. Procédé selon la revendication 1, **caractérisé en ce que** ledit paramètre est choisi dans un groupe comprenant au moins ladite vitesse en cours du véhicule (V), un régime de rotation en cours de roues avant et/ou de roues arrière dudit véhicule (V), et un régime de rotation maximum parmi un régime de rotation en cours de roues avant dudit véhicule (V) et un régime de rotation en cours de roues arrière dudit véhicule (V).

3. Procédé selon la revendication 2, **caractérisé en ce que** ledit paramètre est ladite vitesse en cours du véhicule (V).

4. Procédé selon l'une des revendications 1 à 3, **caractérisé en ce que** ledit premier seuil est choisi en fonction de ladite valeur du paramètre à un instant où débute ledit actionnement de la pédale de frein.

5. Procédé selon l'une des revendications 1 à 4, **caractérisé en ce que** l'on analyse la valeur dudit paramètre dès que ledit mode est activé, et, si ladite valeur analysée demeure inférieure audit second seuil choisi (V0) pendant ladite seconde durée choisie, on désactive ledit mode après ladite seconde durée choisie si ladite pédale de frein n'a pas été actionnée pendant cette seconde durée choisie.

6. Procédé selon l'une des revendications 1 à 5, **caractérisé en ce que** l'on désactive ledit mode dès que ladite pédale de frein a été actionnée pendant une première durée égale audit premier seuil choisi.

7. Dispositif (D) de contrôle d'un mode dit « de marche rampante » d'un véhicule (V), propre à déplacer ce dernier (V) à faible vitesse par fourniture d'un couple variable produit par un groupe motopropulseur sans action d'un conducteur sur une pédale de frein ou une pédale d'accélérateur, **caractérisé en ce qu'**il comprend des moyens de contrôle (MC) agencés, lorsque ledit mode a été activé, pour analyser la valeur d'un paramètre représentatif de la vitesse en cours dudit véhicule (V) consécutivement à un actionnement de ladite pédale de frein pendant une première durée inférieure à un premier seuil choisi, et pour déclencher une désactivation dudit mode après une seconde durée choisie, consécutive à ladite première durée, lorsque ladite valeur analysée demeure inférieure à un second seuil choisi (V0) pendant ladite seconde durée choisie.

8. Dispositif selon la revendication 7, **caractérisé en ce que** lesdits moyens de contrôle (MC) sont agencés pour analyser un paramètre consistant en ladite vitesse en cours du véhicule (V).

9. Véhicule (V) comprenant un groupe motopropulseur à mode dit « de marche rampante », **caractérisé en ce qu'**il comprend en outre un dispositif de contrôle (D) selon l'une des revendications 7 et 8.

10. Véhicule selon la revendication 9, **caractérisé en ce que** ledit groupe motopropulseur est choisi dans un groupe comprenant au moins un groupe motopropulseur tout électrique, un groupe motopropulseur hybride, et un groupe motopropulseur à mécanisme d'automatisation d'un rapport de démultiplication.

## Patentansprüche

1. Verfahren zum Steuern eines sogenannten "Kriechfahrmodus" eines Fahrzeugs (V), das geeignet ist, um dieses Letztere (V) mit geringer Geschwindigkeit durch Lieferung eines variablen Drehmoments zu bewegen, das von einem Antriebsaggregat ohne Einwirkung eines Fahrers auf ein Bremspedal oder ein Gaspedal erzeugt wird, **dadurch gekennzeichnet, dass** es darin besteht, wenn der Modus aktiviert wurde, den Wert eines Parameters zu analysieren, der für die aktuelle Geschwindigkeit des Fahrzeugs (V) im Anschluss an eine Betätigung des Bremspedals während einer ersten Dauer, die geringer ist als ein erster ausgewählter Schwellenwert, zu analysieren und den Modus nach einer zweiten ausgewählten Dauer, im Anschluss an die zweite Dauer, zu deaktivieren, wenn der analysierte Wert während der zweiten ausgewählten Dauer kleiner bleibt als ein ausgewählter Schwellenwert (V0).

2. Verfahren nach Anspruch 1, **dadurch gekennzeichnet, dass** der Parameter aus einer Gruppe ausgewählt ist, die die aktuelle Geschwindigkeit des Fahrzeugs V) und/oder eine aktuelle Drehzahl der Vorderräder und/oder der Hinterräder des Fahrzeugs (V) und/oder eine maximale Drehzahl aus einer aktuellen Drehzahl der Vorderräder des Fahrzeugs (V) und einer aktuellen Drehzahl der Hinterräder des Fahrzeugs (V) umfasst.

3. Verfahren nach Anspruch 2, **dadurch gekennzeichnet, dass** der Parameter die aktuelle Geschwindigkeit des Fahrzeugs (V) ist.

4. Verfahren nach einem der Ansprüche 1 bis 3, **dadurch gekennzeichnet, dass** der erste Schwellenwert in Abhängigkeit von dem Wert des Parameters in einem Augenblick ausgewählt wird, in dem die Betätigung des Bremspedals beginnt.

5. Verfahren nach einem der Ansprüche 1 bis 4, **dadurch gekennzeichnet, dass** man den Wert des Parameters analysiert, sobald der Modus aktiviert ist, und man, falls der analysierte Wert während der zweiten ausgewählten Dauer kleiner bleibt als der zweite ausgewählte Schwellenwert (V0), den Modus nach der zweiten ausgewählten Dauer deaktiviert, falls das Bremspedal während dieser zweiten ausgewählten Dauer nicht betätigt wurde.

6. Verfahren nach einem der Ansprüche 1 bis 5, **dadurch gekennzeichnet, dass** man den Modus deaktiviert, sobald das Bremspedal während einer ersten Dauer, die gleich dem ersten ausgewählten Schwellenwert ist, betätigt wurde.

7. Steuervorrichtung (D) eines sogenannten "Kriechfahrmodus" eines Fahrzeugs (V), der geeignet ist, dieses Letztere (V) mit geringer Geschwindigkeit durch Liefern eines variablen Drehmoments zu bewegen, das von einem Antriebsaggregat ohne Einwirkung eines Fahrers auf ein Bremspedal oder ein Gaspedal erzeugt wird, **dadurch gekennzeichnet, dass** sie Steuermittel (MC) umfasst, die eingerichtet sind, um, wenn der Modus aktiviert wurde, den Wert eines Parameters, der die aktuelle Geschwindigkeit des Fahrzeugs (V) darstellt, im Anschluss an eine Betätigung des Bremspedals während einer ersten Dauer, die kleiner ist als ein erster ausgewählter Schwellenwert, zu analysieren, und um eine Deaktivierung des Modus nach einer zweiten ausgewählten Dauer im Anschluss an die erste Dauer auszulösen, wenn der analysierte Wert während der zweiten ausgewählten Dauer kleiner bleibt als ein ausgewählter Schwellenwert (V0).

8. Vorrichtung nach Anspruch 7, **dadurch gekennzeichnet, dass** die Steuermittel (MC) eingerichtet sind, um einen Parameter zu analysieren, der aus der aktuellen Geschwindigkeit des Fahrzeugs (V) besteht.

9. Fahrzeug (V), das ein Antriebsaggregat mit "Kriechfahrmodus" umfasst, **dadurch gekennzeichnet, dass** es außerdem eine Steuervorrichtung (D) nach einem der Ansprüche 7 und 8 umfasst.

10. Fahrzeug nach Anspruch 9, **dadurch gekennzeichnet, dass** das Antriebsaggregat aus einer Gruppe ausgewählt ist, die ein vollelektrisches Antriebsaggregat und/oder ein Hybridantriebsaggregat und/oder ein Antriebsaggregat mit Automatisierungsmechanismus eines Untersetzungsverhältnisses umfasst.

## Claims

1. A method for controlling a so-called "creeping travel mode" of a vehicle (V) that is capable of moving the latter (V) at a slow speed by providing a variable torque produced by a power train without action of a driver on a brake pedal or an accelerator pedal, **characterized in that** it consists, when said mode has been activated, in analysing the value of a parameter representative of the current speed of said vehicle (V) consecutive to an actuation of said brake pedal during a first duration shorter than a first selected threshold, and in deactivating said mode after a second selected duration, consecutive to said first duration, when said analysed value remains lower than a second selected threshold (V0) during said second selected duration.

2. The method according to Claim 1, **characterized in that** said parameter is selected from a group including at least said current speed of the vehicle (V), a current rotation rate of front wheels and/or of rear wheels of said vehicle (V), and a maximum rotation rate from a current rotation rate of front wheels of said vehicle (V) and a current rotation rate of rear wheels of said vehicle (V).

3. The method according to Claim 2, **characterized in that** said parameter is said current speed of the vehicle (V).

4. The method according to one of Claims 1 to 3, **characterized in that** said first threshold is selected on the basis of said value of the parameter at an instant at which said actuation of the brake pedal begins.

5. The method according to one of Claims 1 to 4, **characterized in that** the value of said parameter is analysed as soon as said mode is activated, and, if said analysed value remains lower than said second selected threshold (V0) during said second selected duration, said mode is deactivated after said second selected duration if said brake pedal has not been actuated during this second selected duration.

6. The method according to one of Claims 1 to 5, **characterized in that** said mode is deactivated as soon as said brake pedal has been actuated during a first duration equal to said first selected threshold.

7. A device (D) for controlling a so-called "creeping travel" mode of a vehicle (V) that is capable of moving the latter (V) at a slow speed by providing a variable torque produced by a power train without action by a driver on a brake pedal or an accelerator pedal, **characterized in that** it includes control means (MC) arranged, when said mode has been activated, to analyse the value of a parameter representative of the current speed of said vehicle (V) consecutive to an actuation of said brake pedal during a first duration shorter than a first selected threshold, and to trigger a deactivation of said mode after a second selected duration, consecutive to said first duration, when said analysed value remains lower than a second selected threshold (V0) during said second selected duration.

8. The device according to Claim 7, **characterized in that** said control means (MC) are arranged to analyse a consistent parameter in said current speed of the vehicle (V).

9. A vehicle (V) including a power train with so-called "creeping travel" mode, **characterized in that** it further includes a control device (D) according to one of Claims 7 and 8.

10. The vehicle according to Claim 9, **characterized in that** said power train is selected from a group including at least an entirely electric power train, a hybrid power train, and a power train with automation mechanism of a gear ratio.
